# EUROPÄISCHE PATENTSCHRIFT

(11) **EP 4 498 043 B1**
(45) Veröffentlichungstag und Bekanntmachung des Hinweises auf die Patenterteilung: **25.02.2026**
(21) Anmeldenummer: 24189955.8
(22) Anmeldetag: 22.07.2024
(51) Int. Cl.: G01D 5/347

(54) **OPTISCHER ENCODER**
OPTICAL ENCODER
CODEUR OPTIQUE

(30) Priorität: 27.07.2023 DE 102023119988
(43) Veröffentlichungstag der Anmeldung: 29.01.2025
(73) Patentinhaber: SICK AG, 79183 Waldkirch (DE)
(72) Erfinder: Hirmer, Katrin, 78166 Donaueschingen (DE)
(74) Vertreter: Manitz Finsterwald Patent- und Rechtsanwaltspartnerschaft mbB

(56) Entgegenhaltungen:
- GB-A- 2 478 168
- JP-A- 2004 219 254
- JP-A- 2005 156 301
- JP-A- 2006 139 216
- US-A- 4 649 267

## Beschreibung

Die Erfindung betrifft einen optischen Encoder, bei dem es sich beispielsweise um einen linearen Positionsgeber oder um einen Drehgeber zur Ermittlung einer Drehposition handelt und der eine Beleuchtungseinheit, eine Empfangseinrichtung und eine Verstärkungseinrichtung umfasst.

Optische Encoder oder Drehgeber verwenden ein fotoelektrisches Messprinzip. Ein Modulator, der beispielsweise ein Strichmuster und eine Referenzmarke umfasst, wird mittels einer Beleuchtungseinheit beleuchtet, die beispielsweise eine Leuchtdiode (LED) aufweist. Das Licht, das an dem Modulator reflektiert wird oder durch diesen hindurchtritt, wird mit mehreren Fotodioden erfasst. Bei einer Verschiebung oder Drehung des Modulators kann anhand der Signale der Fotodioden eine Abstandsänderung bzw. Winkeländerung und zusammen mit der Referenzmarke eine lineare Position oder eine Drehposition ermittelt werden.

Bei solchen optischen Encodern bzw. Drehgebern wird die von der Beleuchtungseinheit emittierte Beleuchtungsstärke oder Lichtintensität durch eine Regelung des Stroms eingestellt, welcher der Beleuchtungseinheit bzw. deren Leuchtdiode zugeführt wird. Eine solche Regelung erfolgt derart, dass die Ausgangssignale der Fotodioden, die das reflektierte oder transmittierte Licht empfangen, mindestens einen vorbestimmten Betrag aufweisen.

Die Anpassung des Stroms, welcher der Leuchtdiode zugeführt wird, d.h. des LED-Stroms, ist erforderlich, da die Intensität des von der Leuchtdiode emittierten Lichts aufgrund deren Alterung und bei sich ändernden Umgebungstemperaturen bei konstantem LED-Strom ständig abnehmen oder zunehmen kann. Mit Erhöhung der Umgebungstemperatur nimmt die Lichtintensität bei konstantem LED-Strom immer weiter ab. Durch eine Anpassung des LED-Stroms wird sichergestellt, dass die Ausgangssignale der Fotodioden, die das reflektierte oder transmittierte Licht empfangen, für eine Auswertung zur Ermittlung der Verschiebungs- oder Drehposition geeignet sind.

Schon allein aufgrund der Alterung der Leuchtdiode wird der LED-Strom während des fortlaufenden Betriebs des optischen Encoders bzw. Drehgebers kontinuierlich erhöht. Die kontinuierliche Erhöhung des LED-Stroms führt zu einer stärkeren Erwärmung der Leuchtdiode und des gesamten Encoders bzw. Drehgebers, wodurch die Lebensdauer der Leuchtdiode und des Encoders bzw. Drehgebers verkürzt wird.

In der JP 2005 156 301 A1 sind ein optischer Encoder und ein Verfahren zum Betreiben eines solchen beschrieben. Der Encoder umfasst eine Lichtquelle, eine Modulationseinrichtung und eine Empfangseinrichtung mit zwei Empfangselementen, die das Licht empfangen, das von der Modulationseinrichtung beeinflusst bzw. transmittiert wird. Ferner geben die Empfangselemente elektrische Signale aus, die der Intensität des empfangenen Lichts entsprechen. Ein Verstärker wird derart gesteuert, dass ein Referenzsignal, das die Ausgabe des Encoders repräsentiert, einen vorbestimmten Wert annimmt.

Eine Aufgabe der Erfindung besteht darin, einen optischen Encoder zu schaffen, bei welchem der Strom, der einer Beleuchtungseinheit des Encoders zugeführt wird, und die Erwärmung des Encoders minimiert werden können.

Diese Aufgabe wird durch einen optischen Encoder mit den Merkmalen des Anspruchs 1 gelöst. Vorteilhafte Weiterbildungen der Erfindung sind in den Unteransprüchen, der Beschreibung und den Zeichnungen angegeben.

Der optische Encoder ist insbesondere ein Drehgeber zur Ermittlung einer Drehposition und umfasst eine Beleuchtungseinheit, eine Empfangseinrichtung und eine Verstärkungseinrichtung. Die Beleuchtungseinheit emittiert Licht in Richtung einer Modulationseinrichtung des Encoders. Die Empfangseinrichtung empfängt Licht, das von der Modulationseinrichtung reflektiert oder durch die Modulationseinrichtung hindurch transmittiert wird, und gibt zumindest ein elektrisches Signal aus, das die Intensität des empfangenen Lichts repräsentiert. Die Verstärkungseinrichtung empfängt das zumindest eine elektrische Signal der Empfangseinrichtung und ist ausgebildet, eine Verstärkung des elektrischen Signals derart anzupassen, dass zumindest ein Ausgangssignal der Verstärkungseinrichtung (zumindest) einen vorbestimmten Betrag aufweist.

Die Beleuchtungseinheit kann eine Leuchtdiode (LED) umfassen. Die Modulationseinrichtung kann eine Codierungseinrichtung sein, die beispielsweise ein Strichmuster und vorzugsweise eine Referenzmarke umfassen kann. Das Licht der Beleuchtungseinheit kann von der Modulationseinrichtung entweder reflektiert oder durch diese hindurch transmittiert werden, um anschließend von der Empfangseinrichtung erfasst zu werden.

Der vorbestimmte Betrag, der für das Ausgangssignal der Verstärkungseinrichtung vorgesehen ist, kann konstant sein und ist durch eine gewünschte Vektorlänge des Ausgangssignals dargestellt, da die Empfangseinrichtung mehrere Fotodioden umfasst, die bei optischen Encodern oder Drehgebern typischerweise sinusförmige elektrische Signale ausgeben. Die gewünschte Vektorlänge bzw. der vorbestimmte Betrag des Ausgangssignals der Verstärkungseinrichtung bezieht sich daher auf den Betrag der als Vektor dargestellten Ausgangssignale.

Der erfindungsgemäße optische Encoder zeichnet sich dadurch aus, dass dessen Ausgangssignal an der Verstärkungseinrichtung dadurch einen vorbestimmten Betrag und somit eine ausreichende Signalstärke annimmt, dass die Verstärkung des elektrischen Signals, das die Empfangseinheit ausgibt, geeignet angepasst wird. Eine Anpassung bzw. Erhöhung der Lichtintensität, die von der Beleuchtungseinheit emittiert wird, ist folglich bei dem erfindungsgemäßen optischen Encoder nicht erforderlich. Die Beleuchtungseinheit kann folglich mit einer minimierten Energiezufuhr, beispielsweise mit einem minimierten LED-Strom, betrieben werden. Durch die Minimierung der Energie bzw. des Stroms, die bzw. der der Beleuchtungseinheit zugeführt wird, wird eine Erwärmung der Beleuchtungseinheit bzw. des gesamten optischen Encoders ebenfalls minimiert. Dadurch kann die Lebensdauer der Beleuchtungseinheit und somit des gesamten Encoders verlängert werden, d.h. im Vergleich zu bekannten optischen Encodern, bei denen beispielsweise der LED-Strom kontinuierlich nachgeregelt und erhöht wird.

Ferner ist eine Rückkopplung mittels der Vektorlänge vorgesehen, um die Verstärkung jeweiliger elektrischer Signale anhand der Rückkopplung zu regeln. Somit kann eine direkte Regelung der Verstärkung der Verstärkungseinrichtung aufgrund der Rückkopplung anstelle einer Regelung der Lichtintensität der Beleuchtungseinrichtung erfolgen. Dadurch kann die Ansteuerung der Beleuchtungseinheit vereinfacht werden. Beispielsweise können weniger Kabel zur Ansteuerung der Beleuchtungseinheit erforderlich sein als dann, wenn die durch die Beleuchtungseinheit emittierte Lichtintensität beispielsweise mittels des LED-Stroms geregelt wird.

Die Anpassung der Verstärkung des elektrischen Signals bzw. der elektrischen Signale kann durch eine Änderung einer Transimpedanz der Verstärkungseinrichtung erfolgen. Das zumindest eine Ausgangssignal der Verstärkungseinrichtung kann somit als Stellgröße verwendet werden, um die Transimpedanz der Verstärkungseinrichtung zu regeln. Alternativ kann die Verstärkungseinrichtung beispielsweise als Stromverstärker implementiert sein.

Zusätzlich kann die Intensität des Lichts anpassbar sein, das die Beleuchtungseinheit in Richtung der Modulationseinrichtung emittiert. Bei dieser Ausführungsform kann somit gleichzeitig eine Regelung der Transimpedanz der Verstärkungseinrichtung und der Lichtintensität erfolgen, die von der Beleuchtungseinheit emittiert wird, so dass der Betrag des zumindest einen Ausgangssignals der Verstärkungseinrichtung den vorbestimmten Betrag aufweist und beispielsweise konstant ist. Auch bei dieser Ausführungsform wird jedoch nicht nur die Lichtintensität der Beleuchtungseinrichtung beispielsweise durch Erhöhen eines LED-Stroms angepasst, sondern es ist hauptsächlich vorgesehen, dass die Transimpedanz der Verstärkungseinrichtung mittels des Ausgangssignals der Verstärkungseinrichtung geregelt wird.

Erfindungsgemäß umfasst die Verstärkungseinrichtung einen Widerstand mit einem positiven Temperaturkoeffizienten (PTC-Widerstand, PTC von engl.: Positive Temperature Coefficient). Ein solcher Widerstand mit einem hohen positiven Temperaturkoeffizienten kann eine Verringerung der von der Beleuchtungseinheit emittierten Lichtintensität bei einer Zunahme der Temperatur des optische Encoders bereits intrinsisch zumindest teilweise kompensieren.

Der positive Temperaturkoeffizient des PTC-Widerstands kann an eine Schätzung einer mit steigender Temperatur abnehmenden Effizienz der Beleuchtungseinheit angepasst sein. Mit anderen Worten wird ein solcher PTC-Widerstand ausgewählt, dass dessen positiver Temperaturkoeffizient die Abnahme der emittierten Lichtintensität der Beleuchtungseinheit mit steigender Temperatur widerspiegelt und damit kompensiert. Dadurch wird die Verstärkung der Verstärkungseinrichtung in dem Maß erhöht, in dem die emittierte Lichtintensität der Beleuchtungseinheit mit steigender Temperatur abnimmt.

Gemäß einer weiteren Ausführungsform kann die Verstärkungseinrichtung ein Widerstandsnetzwerk umfassen. Alternativ oder zusätzlich kann die Verstärkungseinrichtung geschaltete Kondensatoren (switched capacitors) umfassen. Die Anpassung der Verstärkung bzw. der Transimpedanz der Verstärkungseinrichtung kann somit auf flexible Weise implementiert werden und dadurch an den Typ und die Erfordernisse des jeweiligen optischen Encoders angepasst werden. Die Transimpedanz kann somit durch das Widerstandsnetzwerk, durch die geschalteten Kondensatoren oder durch eine Kombination von beiden anpassbar sein.

Die Empfangseinrichtung umfasst erfindungsgemäß ferner mindestens zwei Empfangselemente, die jeweils unterschiedlichen Abschnitten der Modulationseinrichtung zugeordnet sein können. Die mindestens zwei Empfangselemente können Fotodioden sein. Zusammen mit der Modulationseinrichtung können die mindestens zwei Empfangselemente derart ausgelegt sein, dass deren Ausgangssignale um π/2 gegeneinander phasenverschoben sind, d.h. wie Sinus und Cosinus. Die Verstärkung der Verstärkungseinrichtung kann jedoch anhand der Vektorlänge der Ausgangssignale derart angepasst werden, dass diese Vektorlänge beispielsweise konstant ist.

Die Empfangseinrichtung kann ferner vier Empfängerdioden umfassen, während die Verstärkungseinrichtung ausgebildet sein kann, jeweilige Ausgangssignale mittels der Anpassung der Verstärkung derart anzupassen, dass eine Vektordarstellung der Ausgangssignale, die einem jeweiligen elektrischen Signal der vier Empfängerdioden entsprechen, einen vorbestimmten Betrag aufweist. Die elektrischen Signale der vier Empfängerdioden können ähnlich wie bei der vorstehend beschriebenen Ausführungsform mit zumindest zwei Empfangselementen jeweils um π/2 gegeneinander phasenverschoben sein. Durch die Verwendung von vier Empfängerdioden kann die Zuverlässigkeit des optischen Encoders verbessert werden. Die Anpassung der Verstärkung kann bei dieser Ausführungsform jeweils separat für die jeweiligen elektrischen Signale der Empfängerdioden erfolgen. Als Regelgröße dient jedoch wiederum eine Vektorlänge, die als Betrag des Vektors berechnet wird, der als Komponenten die jeweiligen elektrischen Signale der vier Empfängerdioden umfasst.

Weiterer Gegenstand der Erfindung ist ein Verfahren zum Betrieb eines optischen Encoders, insbesondere eines Drehgebers zur Ermittlung einer Drehposition, wobei eine Beleuchtungseinheit Licht in Richtung einer Modulationseinrichtung emittiert, eine Empfangseinrichtung von der Modulationseinrichtung reflektiertes oder durch die Modulationseinrichtung transmittiertes Licht empfängt und zumindest ein elektrisches Signal ausgibt, das die Intensität des empfangenen Lichts repräsentiert, und eine Verstärkungseinrichtung das zumindest eine elektrische Signal der Empfangseinrichtung empfängt und eine Verstärkung des elektrischen Signals derart anpasst, dass zumindest ein Ausgangssignal der Verstärkungseinrichtung (zumindest) einen vorbestimmten Betrag aufweist.

Für das Verfahren gelten die Ausführungen zum Encoder entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Darstellung von Elementen eines jeweiligen optischen Encoders mit Transmission bzw. Reflexion des emittierten Lichts,
- Fig. 2: eine Darstellung von Elementen zur Anpassung der Signale eines optischen Encoders gemäß dem Stand der Technik, und
- Fig. 3: eine Darstellung von Elementen zur erfindungsgemäßen Anpassung der Signale eines optischen Encoders.

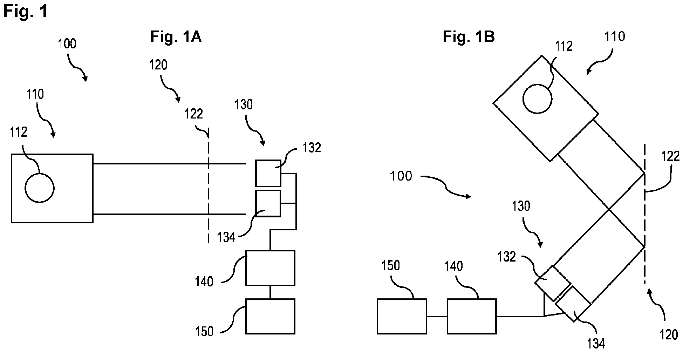

Fig. 1 zeigt eine schematische Übersicht eines optischen Encoders 100. Der optische Encoder 100 weist eine Beleuchtungseinheit 110, die eine Lichtquelle 112 mit einer Leuchtdiode (LED) umfasst, und eine Modulationseinrichtung 120 auf. Die Beleuchtungseinheit 110 emittiert Licht in Richtung der Modulationseinrichtung 120.

Die Modulationseinrichtung 120 weist eine Modulationseinheit bzw. einen Modulator 122 auf, die bzw. der ein Strichmuster umfasst, das in Fig. 1 durch eine gestrichelte Linie angedeutet ist. Die Modulationseinrichtung 120 wird mit dem von der Beleuchtungseinrichtung 110 emittierten Licht beleuchtet. Das Strichmuster kann z.B. helle und dunkle Bereiche aufweisen, wobei das Licht die hellen Bereiche durchdringen kann.

Der optische Encoder 100 umfasst ferner eine Empfangseinrichtung 130, die mindestens zwei Empfängerdioden bzw. Fotodioden 132, 134 aufweist. Die Empfängerdioden 132, 134 sind dafür vorgesehen, das Licht zu empfangen, das von der Beleuchtungseinheit 110 emittiert wird und entweder in Transmission durch die Modulationseinrichtung 120 hindurchtritt (vgl. Fig. 1A) oder von der Modulationseinrichtung 120 reflektiert wird (Fig. 1B). Die Reflexion tritt z.B. bei den hellen Bereichen auf. Die Empfangseinrichtung 130 bzw. deren Empfängerdioden 132, 134 geben ein jeweiliges elektrisches Signal aus, das die Intensität des empfangenen Lichts repräsentiert.

Der Encoder 100 umfasst darüber hinaus eine Verstärkungseinrichtung 140, die das elektrische Signal der Empfangseinrichtung bzw. die elektrischen Signale der jeweiligen Empfängerdioden 132, 134 empfängt. Die elektrischen Signale, die von den Empfängerdioden 132, 134 an die Verstärkungseinrichtung 140 übertragen werden, werden durch die Verstärkungseinrichtung 140 verstärkt, um ein geeignetes Ausgangssignal der Verstärkungseinrichtung 140 an eine Auswertungseinheit 150 auszugeben.

Die Auswertungseinheit 150 ist dafür vorgesehen, anhand der verstärkten Signale der Empfängerdioden 132, 134 eine relative oder absolute Position des Modulationseinheit 122 zu ermitteln. Wenn sich die Modulationseinheit 122 bewegt, d.h. verschoben wird, wird die Lichtintensität, die durch die Modulationseinrichtung 120 hindurchtritt (Fig. 1A) oder von dieser reflektiert wird (Fig. 1B), sinusförmig moduliert. Das Strichmuster der Modulationseinheit 122 ist derart ausgestaltet, dass die elektrischen Signale der Empfängerdioden 132, 134 gegeneinander phasenverschoben sind. Anhand dieser phasenverschobenen elektrischen Signale der Empfängerdioden 132, 134 ermittelt die Auswertungseinheit 150 eine Verschiebung der Modulationseinheit 122 sowie unter Berücksichtigung einer nicht dargestellten Referenzmarke eine absolute Position der Modulationseinheit 122.

Der in Fig. 1A und 1B dargestellte optische Encoder 100 ist somit als linearer Positionsgeber ausgebildet. Wenn der optische Encoder 100 jedoch als Drehgeber ausgebildet ist, bei dem sich die Modulationseinheit 122 beispielsweise an einer Motorwelle befindet, kann mittels des optischen Encoders bzw. Drehgebers 100 eine Drehposition der Motorwelle ermittelt werden.

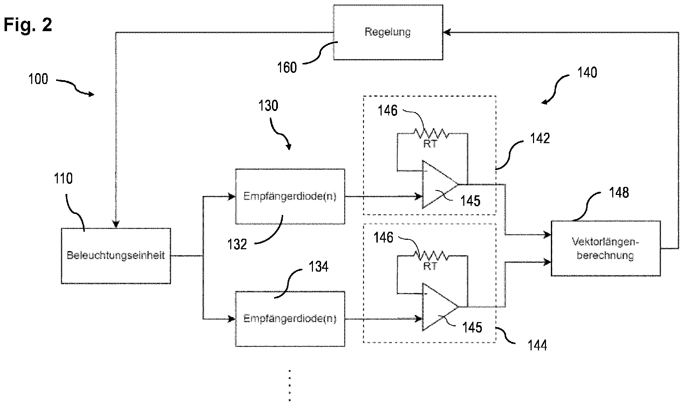

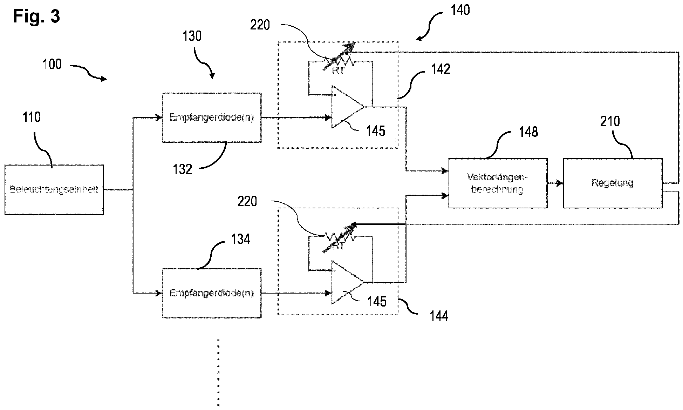

Fig. 2 zeigt eine schematische Darstellung verschiedener Elemente, die zum Einstellen und Anpassen von Ausgangssignalen des optischen Encoders 100 auf eine bekannte Weise verwendet werden. Die Empfängerdioden 132, 134 der Empfangseinrichtung 130 erfassen jeweils das Licht, das von der Beleuchtungseinheit 110 emittiert wird und anschließend entweder durch die Modulationseinrichtung 120 (vgl. Fig. 1) hindurchgetreten ist oder von dieser reflektiert wurde. Die Modulationseinrichtung 120 ist in den Figuren 2 und 3 der Übersichtlichkeit halber nicht dargestellt.

Die Empfängerdioden 132, 134 geben jeweilige elektrische Signale aus, die von jeweiligen Transimpedanzverstärkern 142, 144 empfangen werden, die jeweils einer der Empfängerdioden 132, 134 zugeordnet sind. Die Transimpedanzverstärker 142, 144 umfassen jeweils eine Kombination aus Operationsverstärker 145 und Widerstand 146. Die jeweiligen Ausgangssignale der Transimpedanzverstärker 142, 144 werden von einem Modul 148 zur Vektorlängenberechnung empfangen, das den Betrag bzw. die Länge eines Vektors berechnet, dessen Komponenten aus den Ausgangssignalen der Transimpedanzverstärker 142, 144 gebildet ist.

Wie vorstehend erläutert ist, geben die Empfängerdioden 132, 134 jeweils zueinander phasenverschobene Sinussignale aus, die durch eine Modulation des von der Beleuchtungseinheit 110 emittierten Lichts mittels der Modulationseinrichtung 120 erzeugt werden. Obwohl in Fig. 2 nur zwei Empfängerdioden 132, 134 dargestellt sind, kann die Empfangseinrichtung 130 mehr als zwei Empfängerdioden aufweisen. Beispielsweise können vier oder mehr Empfängerdioden verwendet werden, die mittels der Beleuchtungseinheit 110 über die Modulationseinrichtung 120 derart beleuchtet werden, dass ihre Ausgangssignale jeweils zueinander phasenverschoben sind, beispielsweise um einen Winkel von π/2. Das Modul 148 zur Vektorlängenberechnung berechnet auch bei einer solchen Ausgestaltung der Empfangseinrichtung 130 die Vektorlänge über sämtliche Komponenten des Vektors, die jeweils die verstärkten Signale sämtlicher Empfängerdioden der Empfangseinrichtung 130 umfassen.

Bei optischen Encodern gemäß dem Stand der Technik wird das Ausgangssignal des Moduls 148 zur Vektorlängenberechnung einer Regelung 160 zugeführt, die zum Einstellen und Anpassen der Lichtintensität vorgesehen ist, die von der Beleuchtungseinheit 110 emittiert wird. Das Ausgangssignal des Moduls 148 zur Vektorlängenberechnung wird in der Regelung 160 mit einem vordefinierten Sollwert verglichen, um die Lichtintensität, die von der Beleuchtungseinheit 110 emittiert wird, anhand der Differenz zwischen einem Istwert und diesem Sollwert für das Ausgangssignal des Moduls 148 zur Vektorlängenberechnung zu regeln.

Da die Beleuchtungseinheit 110 eine Leuchtdiode 112 (vgl. Fig. 1) umfasst, regelt die Regelung 160 einen Strom, welcher der Leuchtdiode 112 zugeführt wird (LED-Strom). Dies erfolgt auf eine solche Weise, dass die Ausgangssignale der Transimpedanzverstärker 142, 144 in dem Modul 148 zur Vektorlängenberechnung stets zu einer konstante Vektorlänge bzw. einem konstanten Betrag des Vektors der Ausgangssignale führen, der als Istwert der Regelung 160 dient und zur Regelung des LED-Stroms mit dem Sollwert der Regelung 160 in Beziehung gesetzt wird.

Mit anderen Worten wird der LED-Strom, welcher der Beleuchtungseinheit 110 zugeführt wird, während des Betriebs des optischen Encoders stets nachgeregelt, um ein oder mehrere Ausgangssignals des Encoders 100 mit einer ausreichenden Signalstärke bereitzustellen. Durch das Nachregeln des LED-Stroms mittels der Regelung 160 während des Betriebs des optischen Encoders 100 wird sichergestellt, dass dessen Ausgangssignale stets ausreichend groß sind bzw. einen bestimmten Schwellenwert nicht unterschreiten.

Die Anpassung des LED-Stroms mittels der Regelung 160 führt während eines längerfristigen Betriebs des optischen Encoders 100 meistens jedoch dazu, dass der LED-Strom über die Lebensdauer der Leuchtdiode 112 kontinuierlich erhöht wird. Dies ist bereits durch die natürliche Alterung der Leuchtdiode 112 bedingt. Ferner wird der LED-Strom, welcher der Beleuchtungseinheit 110 zugeführt wird, auch dann erhöht, wenn der optische Encoder 100 bei einer erhöhten Umgebungstemperatur betrieben wird.

Die Erhöhung des LED-Stroms, welcher der Beleuchtungseinheit 104 zugeführt wird, führt jedoch zu einer erhöhten Eigenerwärmung der **LED** 112 und der Beleuchtungseinheit 110 und damit zu einer stärkeren Eigenerwärmung des gesamten optischen Encoders 100. Die zusätzliche Eigenerwärmung durch die Erhöhung des LED-Stroms erfordert, dass der LED-Strom mittels der Regelung 160 kontinuierlich noch weiter erhöht wird. Durch die kontinuierliche Erhöhung des LED-Stroms mittels der Regelung 160 gemäß dem Stand der Technik wird folglich die Lebensdauer der Leuchtdiode 112 verkürzt.

Fig. 3 zeigt ein schematisches Diagramm mit Elementen des optischen Encoders 100, die gemäß einer erfindungsgemäßen Ausführungsform zum Einstellen und Anpassen der Ausgangssignale des optischen Encoders 100 vorgesehen sind. Die Elemente von Fig. 3, welche die gleichen Bezugszeichen wie bestimmte Elemente von Fig. 2 aufweisen, sind mit diesen Elementen identisch und werden im Folgenden nicht notwendigerweise nochmals beschrieben.

Von der Implementierung gemäß Fig. 2 unterscheidet sich der optische Encoder 100 von Fig. 3 dadurch, dass das Ausgangssignal des Moduls 148 zur Vektorlängenberechnung einer Regelung 210 zugeführt wird, die nicht den LED-Strom der Beleuchtungseinheit 110, sondern die Verstärkung in der Verstärkungseinrichtung 140 regelt. Die Transimpedanzverstärker 142, 144 weisen dementsprechend jeweils einen Widerstand 220 mit positivem Temperaturkoeffizienten (PTC-Widerstand) auf. Der Widerstandswert der jeweiligen PTC-Widerstände 220 wird mittels der Regelung 210 geregelt, wobei das Ausgangssignal des Moduls 148 zur Vektorlängenberechnung wiederum als Regelgröße dient.

Die Beleuchtungseinheit 110 ist folglich bei der erfindungsgemäßen Implementierung des Encoders 100 nicht oder nur zusätzlich mit der Regelung 210 verbunden. Die Anpassung der Ausgangssignale der Transimpedanzverstärker 142, 144 erfolgt jedoch hauptsächlich durch eine Regelung der PTC-Widerstände 220 der Transimpedanzverstärker 142, 144.

Die erfindungsgemäße Implementierung des optischen Encoders 100 hat den Vorteil, dass der LED-Strom, welcher der Leuchtdiode 112 (vgl. Fig. 1) der Beleuchtungseinheit 110 zugeführt wird, während des Betriebs des optischen Encoders 100 nicht oder nur in geringem Maß erhöht wird, um eine ausreichende Signalstärke der Ausgangssignale des optischen Encoders 100 sicherzustellen. Da die LED 112 bei der erfindungsgemäßen Implementierung von Fig. 3 somit mit einem verringerten bzw. minimierten LED-Strom betrieben werden kann, wird die Lebensdauer der Leuchtdiode 112 im Vergleich zu der Implementierung von Fig. 2 verlängert, bei welcher der LED-Strom kontinuierlich nachgeregelt wird.

Der PTC-Widerstand 220 des jeweiligen Transimpedanzverstärkers 142, 144 kann derart gewählt werden, dass dessen Verlauf mit der Temperatur der Verringerung der LED-Effizienz bzw. der emittierten Lichtintensität der Leuchtdiode 112 mit steigender Temperatur entspricht und diese Verringerung somit kompensiert. Bei einer Erhöhung der Umgebungstemperatur kann folglich die Verringerung der emittierten Lichtintensität der Leuchtdiode 112 intrinsisch bzw. automatisch durch den PTC-Widerstand 220 kompensiert werden.

Die Implementierung des erfindungsgemäßen optischen Encoders 100, die in Fig. 3 gezeigt ist, hat ferner den Vorteil, dass im Vergleich zur Implementierung von Fig. 2 keine elektrische Verbindung bzw. kein Kabel zwischen der Regelung 210 und der Beleuchtungseinheit 110 erforderlich ist. Ferner können bei der Implementierung von Fig. 3 die Empfangseinrichtung 130, die Verstärkungseinrichtung 140 einschließlich des Moduls 148 zur Vektorlängenberechnung und die Regelung 210 auf einem Schaltkreis bzw. Chip integriert werden. Dies ist vor allem bei einem optischen Encoder mit Transmission vorteilhaft (vgl. Fig. 1A), bei der die Beleuchtungseinheit 110 auf einer Seite der Modulationseinrichtung 120 und die Empfangseinrichtung 130, die Verstärkungseinrichtung 140 und die Regelung 210 auf der anderen Seite der Modulationseinrichtung 120 angeordnet sind.

Darüber hinaus ist es auch möglich, die in Fig.2 und Fig. 3 dargestellten Regelungen gemäß einer weiteren Ausführungsform miteinander zu kombinieren. Konkret umfasst diese Ausführungsform, dass sowohl die Verstärkung in der Verstärkungseinrichtung 140 mittels der Regelung 210 (vgl. Fig. 3) als auch der LED-Strom mittels der Regelung 160 (vgl. Fig. 2) anhand des Ausgangssignals des Moduls 148 zur Vektorlängenberechnung geregelt werden, das beiden Regelungen 160, 210 zugeführt wird.

### Bezugszeichenliste

- 100: Optischer Encoder
- 110: Beleuchtungseinheit
- 112: Lichtquelle mit Leuchtdiode (LED)
- 120: Modulationseinrichtung
- 122: Modulationseinheit bzw. Modulator
- 130: Empfangseinrichtung
- 132, 134: Empfängerdiode, Fotodiode
- 140: Verstärkungseinrichtung
- 142, 144: Transimpedanzverstärker
- 145: Operationsverstärker
- 146: Widerstand
- 148: Modul zur Vektorlängenberechnung
- 150: Auswertungseinheit
- 160: Regelung
- 210: Regelung
- 220: PTC-Widerstand

## Patentansprüche

1. Optischer Encoder (100), insbesondere linearer Positionsgeber oder Drehgeber zur Ermittlung einer Drehposition, umfassend:
eine Beleuchtungseinheit (110), die Licht in Richtung einer Modulationseinrichtung (120) emittiert,
eine Empfangseinrichtung (130), die von der Modulationseinrichtung (120) reflektiertes oder durch die Modulationseinrichtung (120) transmittiertes Licht empfängt,
wobei die Empfangseinrichtung (130) mindestens zwei Empfangselemente (132, 134) umfasst, die jeweils unterschiedlichen Abschnitten der Modulationseinrichtung (120) zugeordnet sind und jeweils ein elektrisches Signal ausgeben, das die Intensität des empfangenen Lichts repräsentiert,
wobei die Signale jeweils zueinander phasenverschobene Sinussignale sind, die durch eine Modulation des von der Beleuchtungseinheit (110) emittierten Lichts mittels der Modulationseinrichtung (120) erzeugt werden, und
eine Verstärkungseinrichtung (140), welche die elektrischen Signale der Empfangselemente (132, 134) empfängt und ausgebildet ist, eine Verstärkung der elektrischen Signale derart anzupassen, dass eine Vektorlänge, die ein Modul (148) zur Vektorlängenberechnung anhand von als Vektor dargestellten Ausgangssignalen der Verstärkungseinrichtung (140) berechnet, einen vorbestimmten Betrag aufweist,
wobei die Verstärkungseinrichtung (140) einen Widerstand (220) mit einem positiven Temperaturkoeffizienten umfasst und
wobei über eine Regelung (210) eine Rückkopplung der Vektorlänge vorgesehen ist, um die Verstärkung der jeweiligen elektrischen Signale anhand der Rückkopplung zu regeln.

2. Optischer Encoder (100) nach Anspruch 1,
wobei die Anpassung der Verstärkung der elektrischen Signale durch eine Änderung einer Transimpedanz der Verstärkungseinrichtung (140) erfolgt.

3. Optischer Encoder (100) nach Anspruch 2,
wobei zusätzlich die Intensität des Lichts anpassbar ist, das die Beleuchtungseinheit (110) in Richtung der Modulationseinrichtung (120) emittiert.

4. Optischer Encoder (100) nach einem der Ansprüche 1 bis 3,
wobei der positive Temperaturkoeffizient des Widerstands an eine Schätzung einer mit steigender Temperatur abnehmenden Effizienz der Beleuchtungseinheit (110) angepasst ist.

5. Optischer Encoder (100) nach einem der Ansprüche 1 bis 4,
wobei die Verstärkungseinrichtung (140) ein Widerstandsnetzwerk umfasst.

6. Optischer Encoder (100) nach einem der Ansprüche 1 bis 5,
wobei die Verstärkungseinrichtung (140) geschaltete Kondensatoren umfasst.

7. Optischer Encoder (100) nach einem der Ansprüche 1 bis 6,
wobei die Empfangseinrichtung (130) vier Empfängerdioden (132, 134) umfasst und die Verstärkungseinrichtung (140) ausgebildet ist, jeweilige Ausgangssignale mittels der Anpassung der Verstärkung derart anzupassen, dass das jeweilige Ausgangssignal, das einem jeweiligen elektrischen Signal der vier Empfängerdioden (132, 134) entspricht, jeweils einen vorbestimmten Betrag aufweist.

8. Verfahren zum Betrieb eines optischen Encoders (100), insbesondere eines linearen Positionsgebers oder Drehgebers zur Ermittlung einer Drehposition, wobei:
eine Beleuchtungseinheit (110) Licht in Richtung einer Modulationseinrichtung (120) emittiert,
eine Empfangseinrichtung (130) von der Modulationseinrichtung (120) reflektiertes oder durch die Modulationseinrichtung (120) transmittiertes Licht empfängt und mindestens zwei Empfangselemente (132, 134) umfasst, die jeweils unterschiedlichen Abschnitten der Modulationseinrichtung (120) zugeordnet sind,
die mindestens zwei Empfangselemente (132, 134) jeweils ein elektrisches Signal ausgeben, das die Intensität des empfangenen Lichts repräsentiert, wobei die Signale jeweils zueinander phasenverschobene Sinussignale sind, die durch eine Modulation des von der Beleuchtungseinheit (110) emittierten Lichts mittels der Modulationseinrichtung (120) erzeugt werden, und
eine Verstärkungseinrichtung (140) die elektrischen Signale der Empfangselemente (132, 134) empfängt und eine Verstärkung der elektrischen Signale derart anpasst, dass eine Vektorlänge, die ein Modul (148) zur Vektorlängenberechnung anhand von als Vektor dargestellten Ausgangssignalen der Verstärkungseinrichtung (140) berechnet, einen vorbestimmten Betrag aufweist,
wobei die Verstärkungseinrichtung (140) einen Widerstand (220) mit einem positiven Temperaturkoeffizienten umfasst und
wobei über eine Regelung (210) eine Rückkopplung der Vektorlänge vorgesehen ist, um die Verstärkung der jeweiligen elektrischen Signale anhand der Rückkopplung zu regeln.

## Claims

1. An optical encoder (100), in particular a linear position encoder or a rotary encoder for determining a rotary position, comprising:
an illumination unit (110) which emits light in the direction of a modulation device (120),
a reception device (130) which receives light reflected by the modulation device (120) or transmitted by the modulation device (120),
wherein the reception device (130) comprises at least two reception elements (132, 134) which are each associated with different sections of the modulation device (120) and which each output an electrical signal that represents the intensity of the received light, wherein the signals are each sinusoidal signals which are phase-shifted with respect to one another and which are generated by a modulation of the light emitted by the illumination unit (110) by means of the modulation device (120), and
an amplification device (140) which receives the electrical signals of the reception elements (132, 134) and which is configured to adapt an amplification of the electrical signals such that a vector length calculated by a module (148) for vector length calculation based on output signals of the amplification device (140), which are represented as a vector, has a predetermined magnitude,
wherein the amplification device (140) comprises a resistor (220) having a positive temperature coefficient, and
wherein feedback of the vector length is provided via a closed-loop control (210) to control the amplification of the respective electrical signals based on the feedback.

2. An optical encoder (100) according to claim 1,
wherein the adaptation of the amplification of the electrical signals takes place by changing a transimpedance of the amplification device (140).

3. An optical encoder (100) according to claim 2,
wherein the intensity of the light that is emitted by the illumination unit (110) in the direction of the modulation device (120) can additionally be adapted.

4. An optical encoder (100) according to any one of the claims 1 to 3,
wherein the positive temperature coefficient of the resistor is adapted to an estimate of an efficiency of the illumination unit (110) that decreases as the temperature increases.

5. An optical encoder (100) according to any one of the claims 1 to 4,
wherein the amplification device (140) comprises a resistance network.

6. An optical encoder (100) according to any one of the claims 1 to 5,
wherein the amplification device (140) comprises connected capacitors (35).

7. An optical encoder (100) according to any one of the claims 1 to 6,
wherein the reception device (130) comprises four receiver diodes (132, 134) and the amplification device (140) is configured to adapt respective output signals by means of the adaptation of the amplification such that the respective output signal that corresponds to a respective electrical signal of the four receiver diodes (132, 134) has a predetermined magnitude in each case.

8. A method for operating an optical encoder (100), in particular a linear position encoder or a rotary encoder for determining a rotary position, wherein:
an illumination unit (110) emits light in the direction of a modulation device (120),
a reception device (130) receives light reflected by the modulation device (120) or transmitted by the modulation device (120) and comprises at least two reception elements (132, 134) which are each associated with different sections of the modulation device (120),
the at least two reception elements (132, 134) each output an electrical signal that represents the intensity of the received light, wherein the signals are each sinusoidal signals which are phase-shifted with respect to one another and which are generated by a modulation of the light emitted by the illumination unit (110) by means of the modulation device (120), and
an amplification device (140) which receives the electrical signals of the reception elements (132, 134) and which adapts an amplification of the electrical signals such that a vector length calculated by a module (148) for vector length calculation based on output signals of the amplification device (140), which are represented as a vector, has a predetermined magnitude,
wherein the amplification device (140) comprises a resistor (220) having a positive temperature coefficient, and
wherein feedback of the vector length is provided via a closed-loop control (210) to control the amplification of the respective electrical signals based on the feedback.

## Revendications

1. Codeur optique (10), en particulier codeur linéaire de position ou un codeur rotatif pour déterminer une position de rotation, comprenant :
une unité d'éclairage (110) qui émet de la lumière en direction d'un dispositif de modulation (120),
un dispositif de réception (130) qui reçoit la lumière réfléchie par le dispositif de modulation (120) ou transmise à travers le dispositif de modulation (120),
le dispositif de réception (130) comprenant au moins deux éléments de réception (132, 134) qui sont associés chacun à différentes parties du dispositif de modulation (120) et émettent chacun un signal électrique représentant l'intensité de la lumière reçue, les signaux étant des signaux sinusoïdaux déphasés l'un par rapport à l'autre qui sont générés par une modulation de la lumière émise par l'unité d'éclairage (110) au moyen du dispositif de modulation (120), et
un dispositif d'amplification (140) qui reçoit les signaux électriques provenant des éléments de réception (132, 134) et qui est conçu pour adapter une amplification des signaux électriques de telle sorte que la longueur du vecteur, calculée par un module (148) de calcul de la longueur du vecteur à partir des signaux de sortie, représentés comme vecteur, du dispositif d'amplification (140) présente une valeur absolue prédéterminée,
dans lequel
le dispositif d'amplification (140) comprend une résistance (220) à coefficient de température positif, et
un module de régulation (210) assure une rétroaction de la longueur du vecteur afin de réguler l'amplification des signaux électriques respectifs à partir de la rétroaction.

2. Codeur optique (100) selon la revendication 1,
dans lequel l'adaptation de l'amplification des signaux électriques est réalisée par une modification de la transimpédance du dispositif d'amplification (140).

3. Codeur optique (100) selon la revendication 2,
dans lequel, en supplément, l'intensité de la lumière émise par l'unité d'éclairage (110) en direction du dispositif de modulation (120) est adaptable.

4. Codeur optique (100) selon l'une des revendications 1 à 3,
dans lequel le coefficient de température positif de la résistance est adapté à une estimation de l'efficacité de l'unité d'éclairage (110) qui diminue au fur et mesure que la température augmente.

5. Codeur optique (100) selon l'une des revendications 1 à 4,
dans lequel le dispositif d'amplification (140) comprend un réseau de résistances.

6. Codeur optique (100) selon l'une des revendications 1 à 5,
dans lequel le dispositif d'amplification (140) comprend des condensateurs commutés.

7. Codeur optique (100) selon l'une des revendications 1 à 6,
dans lequel le dispositif de réception (130) comprend quatre diodes réceptrices (132, 134), et le dispositif d'amplification (140) est conçu pour adapter les signaux de sortie respectifs par adaptation de l'amplification de telle sorte que le signal de sortie respectif, correspondant à un signal électrique respectif des quatre diodes réceptrices (132, 134), présente une valeur absolue prédéterminée.

8. Procédé de fonctionnement d'un codeur optique (100), en particulier d'un codeur linéaire de position ou d'un codeur rotatif pour déterminer une position de rotation, dans lequel :
une unité d'éclairage (110) émet de la lumière en direction d'un dispositif de modulation (120),
un dispositif de réception (130) reçoit la lumière réfléchie par le dispositif de modulation (120) ou transmise à travers le dispositif de modulation (120) et comprend au moins deux éléments de réception (132, 134) qui sont associés chacun à différentes parties du dispositif de modulation (120),
lesdits au moins deux éléments de réception (132, 134) émettent chacun un signal électrique représentant l'intensité de la lumière reçue, les signaux étant des signaux sinusoïdaux déphasés l'un par rapport à l'autre qui sont générés par une modulation de la lumière émise par l'unité d'éclairage (110) au moyen du dispositif de modulation (120), et
un dispositif d'amplification (140) reçoit les signaux électriques provenant des éléments de réception (132, 134) et adapte une amplification des signaux électriques de telle sorte que la longueur du vecteur, calculée par un module (148) de calcul de la longueur du vecteur à partir des signaux de sortie, représentés comme vecteur, du dispositif d'amplification (140) présente une valeur absolue prédéterminée,
le dispositif d'amplification (140) comprend une résistance (220) à coefficient de température positif, et
un module de régulation (210) assure une rétroaction de la longueur du vecteur afin de réguler l'amplification des signaux électriques respectifs à partir de la rétroaction.
